# EUROPEAN PATENT APPLICATION

(11) **EP 3 970 657 A1**
(43) Date of publication of application: **23.03.2022**
(21) Application number: 21197408.4
(22) Date of filing: 17.09.2021
(51) Int. Cl.: A61C 8/00

(54) **ADAPTOR FOR DENTAL IMPLANT ABUTMENT**

(30) Priority: 22.09.2020 US 202063081466 P
(71) Applicant: Simple Smiles Dental Solutions Inc., Toronto ON M5S 2B4 (CA)
(72) Inventor: JUSUF, Armand, Reno, 89506 (US)
(74) Representative: Remus, Alvaro Johannes

(57) **Abstract**

An adaptor 100 for a dental implant abutment includes a body 102 extending along a longitudinal axis 104 between a proximal end 106 and a distal end 108. The body 102 has a longitudinally extending bore 110 extending from the proximal end 106 for sliding receipt of a post of a dental implant abutment. The body 102 has a distal shaft 112 for inserting into a dental prosthetic, and the distal shaft 112 tapers in outer diameter going towards the distal end 108. The body 102 has proximal flange 114 for securing between the dental prosthetic and the dental implant abutment. The proximal flange 114 has a first ledge 120 for abutting the dental implant abutment and a second ledge 122 for abutting the dental prosthetic, and the second ledge 122 tapers in outer diameter going towards the distal end 108.

## Description

### FIELD

**This** document relates to dental implant systems. More specifically, this document relates to adaptors for dental implant abutments, systems including such adaptors, and related methods.

### BACKGROUND

U.S. Patent Application Publication No. 2012/0322030 A1 (to Fromovich) discloses a modular abutment system for offsetting an angle of tilted dental implants in a manner preserving structural stability of restoration components throughout the life of the restoration. A specialized deployment tool is configurable to enable a practitioner to utilize available workspace during deployment.

International Patent Application Publication No. WO/2019/078818 (to Hale) discloses a convertible dental assembly. The convertible dental assembly includes abutments adapted for fixing with implants; fixed-hybrid housings adapted for fixing with the abutments through a fixing screw; and removable-hybrid housings, adapted for engagement with abutments through snap fit parts. The fixing screw and the snap fit part are fixed to the abutments through same female threads on the abutments. The fixed-hybrid housings are used for a fixed-hybrid dental assembly during period of healing of the implants, and replaced by the plurality of removable-hybrid housings along with the snap fit parts for a removable-hybrid dental assembly after the period of healing of the implants. The fixed-hybrid housings and the removable-hybrid housings can be captured in the dental assembly via chair-side pickup at respective instances. The removable-hybrid housings can be placed indirectly by a dental laboratory if a new denture is being fabricated. The abutment includes an outer frustoconical profile that engages with matching frustoconical cavities in the fixed-hybrid housings and removable-hybrid housings.

### SUMMARY

**The** following summary is intended to introduce the reader to various aspects of the detailed description, but not to define or delimit any invention.

Adaptors for dental implant abutments are disclosed. According to some aspects an adaptor for a dental implant abutment includes a body extending along a longitudinal axis between a proximal end and a distal end. The body has a longitudinally extending bore extending from the proximal end for sliding receipt of a post of a dental implant abutment. The body has a distal shaft for inserting into a dental prosthetic, and the distal shaft tapers in outer diameter going towards the distal end. The body has proximal flange for positioning between the dental prosthetic and the dental implant abutment. The proximal flange has a first ledge for abutting the dental implant abutment and a second ledge for abutting the dental prosthetic, and the second ledge tapers in outer diameter going towards the distal end.

In some examples, the distal shaft is frustoconical.

In some examples, the proximal flange further includes a third ledge between the first ledge and the second ledge for abutting gum tissue. The third ledge can taper in outer diameter going from the second ledge towards the first ledge.

In some examples, the distal shaft has an outer surface that is inclined at a first acute angle with respect to the longitudinal axis, and the second ledge is inclined at a second acute angle with respect to the longitudinal axis. The second acute angle can be greater than the first acute angle. The proximal flange further can further include a third ledge between the first ledge and the second ledge for abutting gum tissue. The third ledge can be inclined at an obtuse angle with respect to the longitudinal axis. The first ledge can be at a right angle with respect to the longitudinal axis.

In some examples, the body is fabricated from a polymer, a ceramic, and/or a metal.

Dental implant systems are also disclosed. According to some aspects, a dental implant system includes an abutment for securing between a dental implant and a dental prosthetic. The abutment has a first section for securing to the dental implant and a second section including a post. The system further includes an adaptor for securing the abutment to the dental implant. The adaptor includes a body extending longitudinally between a proximal end positionable towards the dental implant and a distal end positionable towards the dental prosthetic. The body has a bore extending longitudinally from the proximal end for sliding receipt of the post, and a longitudinally extending distal shaft for inserting into the dental prosthetic. The distal shaft can taper in outer diameter going towards the distal end.

In some examples, the distal shaft is frustoconical.

In some examples, the body further includes a proximal flange positioned proximally of the distal shaft for securing between the dental prosthetic and the abutment. The proximal flange can include a first ledge for abutting the abutment. The proximal flange can include a second ledge for abutting the dental prosthetic, and the second ledge can taper in outer diameter going towards the distal end. The proximal flange can include a third ledge between the first ledge and the second ledge for abutting gum tissue. The third ledge tapers in outer diameter going from the second ledge towards the first ledge.

In some examples, the body extends along a longitudinal axis between the proximal end and the distal end. The distal shaft can have an outer surface that is inclined at a first acute angle with respect to the longitudinal axis. The second ledge can be inclined at a second acute angle with respect to the longitudinal axis. The second acute angle can be greater than the first acute angle.

In some examples, the flange further includes a third ledge between the first ledge and the second ledge for abutting gum tissue. The third ledge can be inclined at an obtuse angle with respect to the longitudinal axis.

In some examples, the first ledge is at a right angle with respect to the longitudinal axis.

In some examples, the abutment is fabricated from a metal, and the adaptor is fabricated from a polymer, a ceramic, and/or a metal.

Methods for installing a dental implant system are also disclosed. According to some aspects, a method for installing a dental implant system includes a) securing a first section of an abutment to an implant; b) sliding an adaptor onto a post of a second section of the abutment to position a proximal end of the adaptor towards the implant and a distal end of the adaptor away from the implant, and adhering the adaptor to the post; and c) inserting the distal end of the adaptor into a dental prosthetic to position a distal shaft of the adaptor within the dental prosthetic, wherein the distal shaft tapers in outer diameter going towards the distal end, and adhering the distal shaft to the dental prosthetic.

In some examples, the method further includes d) positioning a proximal flange of the adaptor between the dental prosthetic and the abutment. Step b) can include positioning a first ledge of the flange to abut the abutment.

In some examples, step d) further includes positioning a second ledge of the flange to abut the dental prosthetic, wherein the second ledge tapers in outer diameter going towards the distal end.

In some examples, step d) further includes positioning a third ledge of the flange to abut a patient's gum tissue, wherein the third ledge tapers in outer diameter going towards the proximal end.

### BRIEF DESCRIPTION OF THE DRAWINGS

The drawings included herewith are for illustrating various examples of articles, methods, and apparatuses of the present specification and are not intended to limit the scope of what is taught in any way. In the drawings:
Figure 1 is a perspective view of an example adaptor for a dental implant abutment;
Figure 2 is a side view of the adaptor of Figure 1;
Figure 3 is a cross-section taken along line 3-3 in Figure 2;
Figure 4 is a side view of another example adaptor;
Figure 5 is a side view of another example adaptor;
Figure 6 is an exploded perspective view of a dental implant system including the adaptor of Figures 1 to 3;
Figure 7 is a perspective view of the dental implant system of Figure 6, installed in a jaw; and
Figure 8 is a cross-section taken along line 8-8 in Figure 7; and
Figure 9 is a partial perspective view of another dental implant system including a full arch replacement, installed in a jaw.

### DETAILED DESCRIPTION

Various apparatuses or processes or compositions will be described below to provide an example of an embodiment of the claimed subject matter. No embodiment described below limits any claim and any claim may cover processes or apparatuses or compositions that differ from those described below. The claims are not limited to apparatuses or processes or compositions having all of the features of any one apparatus or process or composition described below or to features common to multiple or all of the apparatuses or processes or compositions described below. It is possible that an apparatus or process or composition described below is not an embodiment of any exclusive right granted by issuance of this patent application. Any subject matter described below and for which an exclusive right is not granted by issuance of this patent application may be the subject matter of another protective instrument, for example, a continuing patent application, and the applicants, inventors or owners do not intend to abandon, disclaim or dedicate to the public any such subject matter by its disclosure in this document.

As used herein, the term 'dental implant' refers to a part or piece that is intended to replace a tooth root, and in use is implanted into available patient bone (root-form, zygomas, sinus, or resected bone such as but not limited to fibular implanted bone), or onto the bone beneath the tissue (subperiosteal).

As used herein, the term 'dental prosthetic' refers to an artificial tooth or teeth, or a part including an artificial tooth or teeth. A 'dental prosthetic' may also be referred to as a 'crown' or a 'bridge'.

As used herein, the term 'dental implant abutment' (or simply 'abutment') refers to a piece or part that joins a dental implant to a dental prosthetic. For example, a dental implant abutment may have a first end that is screwed to a dental implant, and a second end that is inserted into and adhered to a dental prosthetic. The first end and second end may be integral, or may be separate pieces that are secured together (i.e. an abutment may be of a one-piece construction or a multi-piece construction).

Generally disclosed herein is an adaptor for a dental implant abutment, a dental implant system including such an adaptor, and related methods. The adaptor is generally configured to enhance the attachment between a dental implant abutment and a dental prosthetic, and to minimize or reduce or prevent adhesive overflow. Furthermore, the adaptor can be custom made for a given prefabricated dental implant abutment and for a given dental prosthetic. This can further enhance the attachment between a dental implant abutment and a dental prosthetic, as the adaptor can be made to tightly fit the dental implant abutment and can be made from a similar material to the dental prosthetic, which can enhance bonding. Furthermore, the adaptor can allow facilitate greater accuracy in placement of the dental prosthetic, which allow for the use of smaller surface holes in a dental prosthetic. Furthermore, the use of the adaptor can minimize or reduce the need for adjustment of the path of insertion of the adaptor. This can in turn simplify the implant procedure and help to preserve the function and aesthetics of the dental prosthetic.

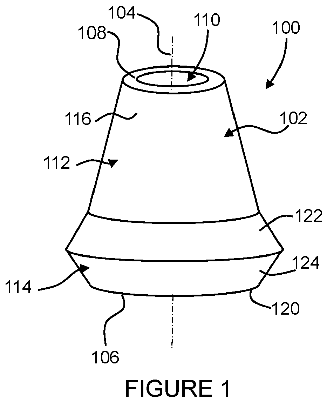

Referring now to Figures 1 to 3, a first example of an adaptor 100 is shown. The adaptor 100 includes a body 102, which is of a one-piece construction. The body 102 may be fabricated, for example, by 3D-printing, molding, or milling. The body 102 may be mass-produced, or as mentioned above may be custom-made to fit a given pre-fabricated abutment and given dental prosthetic. Preferably, the body 102 is fabricated from a similar material to the dental prosthetic with which it is to be installed. For example, the body 102 may be fabricated from a polymer such as polymethylmethacrylate (PMMA), a metal such as zirconia, an acrylic, a nano-ceramic, a composite material, or a combination thereof.

Referring still to Figures 1 to 3, the body 102 extends along a longitudinal axis 104 between a proximal end 106 and a distal end 108. As used herein, the term 'proximal' indicates that when installed, the referenced part is relatively close to the gums, and the term 'distal' indicates that when installed, the referenced part is relatively far from the gums.

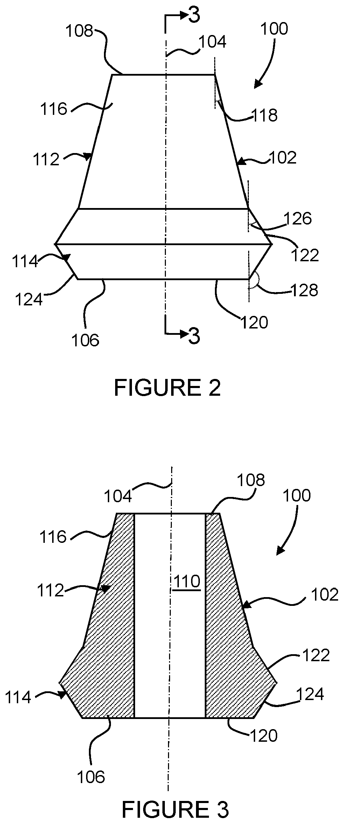

Referring to Figures 1 and 3, the body 102 has a longitudinally extending bore 110, for sliding receipt of a post of a dental implant abutment (as will be described in further detail below). In the example shown, the bore 110 extends from the proximal end 106 through to the distal end 108. In alternative examples, the bore can extend from the proximal end to a position shy of the distal end (i.e. the bore need not extend entirely through the body). In the example shown, the bore 110 is circular in cross-section. In alternative examples, the bore may be of another cross-sectional shape. Furthermore, the bore can optionally include grooves or ridges or another feature to enhance attachment to the post of the abutment.

Referring still to Figures 1 to 3, the body 102 includes a distal shaft 112, for inserting into a dental prosthetic (as will be described in further detail below), and a proximal flange 114, for securing between the dental prosthetic and the abutment (as will be described in further detail below).

Referring still to Figures 1 to 3, the distal shaft 112 tapers in outer diameter going towards the distal end 108, and in the example shown is frusto-conical. The taper in outer diameter can allow for a good fit between the adaptor 100 and the dental prosthetic, and can facilitate the implant procedure. The distal shaft 112 has an outer surface 116 that is inclined at a first acute angle 118 (shown in Figure 2) with respect to the longitudinal axis 104, and the first acute angle 118 can be, for example between about 5 degrees and about 85 degrees (e.g. about 15 degrees).

In some examples (not shown), the outer surface can be textured (e.g. with ridges) in order to enhance bonding with a dental prosthetic.

Referring still to Figures 1 to 3, in the example shown the proximal flange 114 includes a set of ledges, namely a first ledge 120 for abutting the abutment, a second ledge 122 for abutting the dental prosthetic, and a third ledge 124 between the first ledge 120 and the second ledge 122 for abutting gum tissue. In the example shown, the first ledge 120 is at a right angle with respect to the longitudinal axis 104. The second ledge 122 is inclined at a second acute angle 126 (shown in Figure 2) with respect to the longitudinal axis 104, so that the second ledge 122 tapers in outer diameter going towards the distal end 108. The second acute angle 126 can be, for example between about 5 degrees and about 85 degrees (e.g. about 45 degrees). In the example shown, the second acute angle 126 is greater than the first acute angle 118 ― i.e. the first acute angle 118 is about 15 degrees and the second acute 126 angle is about 45 degrees. Providing an incline in the second ledge 122 can allow for close contact between the dental prosthetic and the second ledge 122, which can minimize or prevent or avoid adhesive overflow. Furthermore, in the example shown, the third ledge 124 is inclined at an obtuse angle 128 (shown in Figure 2) with respect to the longitudinal axis 104, so that the third ledge 124 tapers in outer diameter going from the second ledge 122 towards the first ledge 120. The obtuse angle 128 can be, for example between about 95 degrees and about 175 degrees (e.g. about 135 degrees).

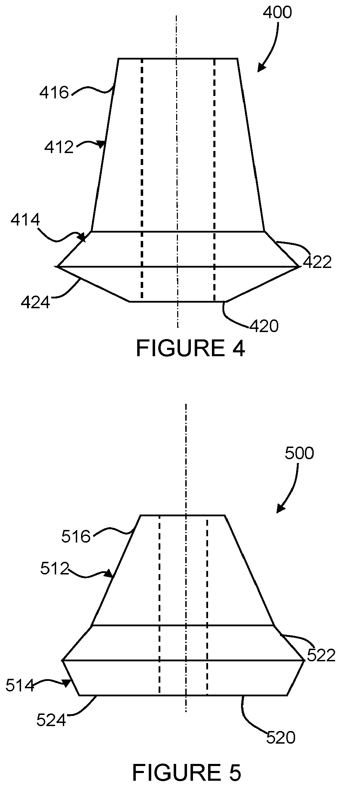

Referring now to Figures 4 and 5, two alternative examples of adaptors are shown, at 400 and 500, respectively. The adaptors 400 and 500 are similar to the adaptor 100; however, the distal shafts (412 and 512, respectively) and proximal flanges (414 and 514, respectively) are of different relative sizes, and the outer surfaces (416 and 516, respectively) and ledges (420, 422, and 424; and 520, 522, and 524) are at different angles.

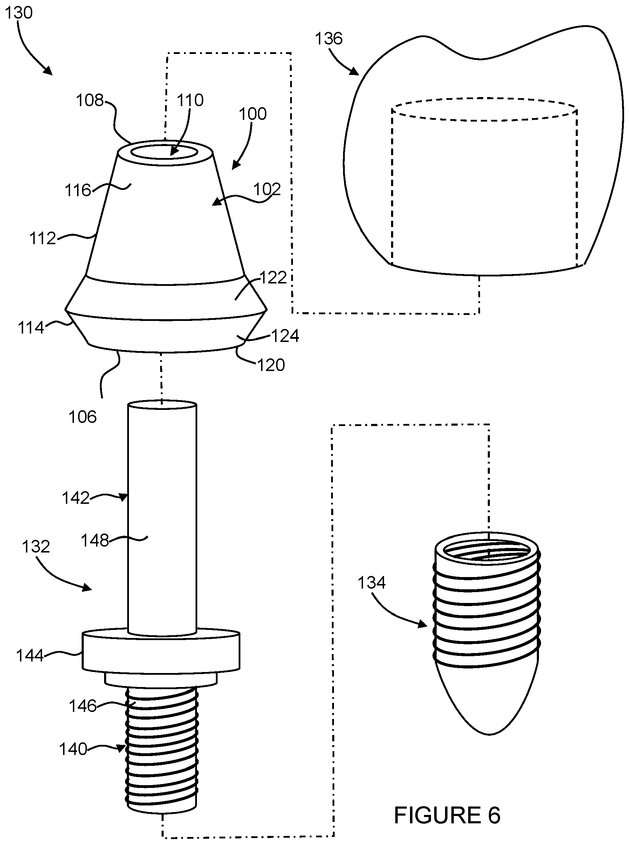

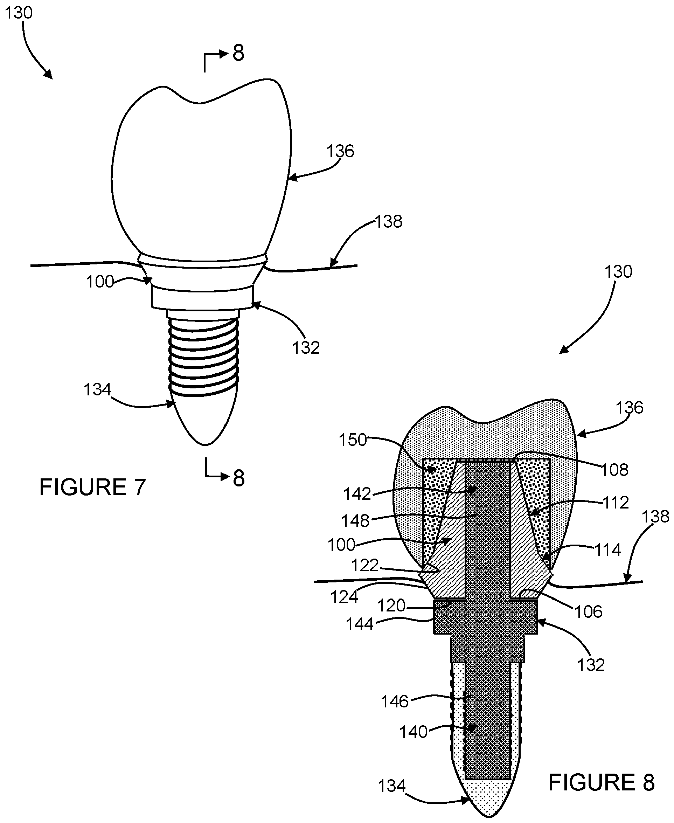

Referring now to Figures 6 to 8, the adaptor 100 of Figures 1 to 3 is shown as part of a dental implant system 130, including an abutment 132, a dental implant 134, and a dental prosthetic 136. In Figure 6, the parts of the system are shown unassembled, and in Figures 7 and 8, the parts of the system are shown assembled together and implanted in a jaw, with the gum tissue generally shown at 138.

The dental implant 134 and dental prosthetic 136 can be of any suitable design, including those known in the art, and are not described in detail herein.

Referring to Figures 6 and 8, the abutment 132 generally includes a first section 140 and a second section 142, and a flange 144 between the first section 140 and second section 142. The first section 140 is for securing to the dental implant 134, and in the example shown includes a threaded shaft 146 that is engageable with the dental implant 134. The second section 142 engages with the adaptor 100, and includes a post 148 that can be slidably received in the bore 110 (not labelled in Figure 8). In the example shown, the post 148 is generally circular in cross section and has a smooth outer surface. In alternative examples, the post can be of another cross-sectional shape, and/or can be textured (e.g. can include ridges). The abutment 132 can in some examples be a commercially available pre-fabricated abutment. The height of the post 148 can optionally be trimmed to match the height of the adaptor 100.

Referring to Figures 7 and 8, in use, with the implant 134 implanted in the gum tissue 138, the first section 140 (not visible in Figure 7) of the abutment 132 can be secured to the implant 134 (e.g. by screwing the threaded shaft 146 into the implant 134). The adaptor 100 can then be slid onto the post 148 (not visible in Figure 7), with the proximal end 106 of the adaptor 100 towards the implant 134 and the distal end 108 of the adaptor 100 away from the implant 134, to abut the flange 144 of the abutment 130 with the first ledge 120 and to abut the gum tissue 138 with the third ledge 124. The adaptor 100 can then be adhered to the post 148. The distal end 108 of the adaptor 100 can then be inserted into the dental prosthetic 136, to position the distal shaft 112 within the dental prosthetic 136, and to position the proximal flange 114 between the dental prosthetic 136 and the abutment 132, with the second ledge 122 abutting the dental prosthetic 136. The distal shaft 112 can then be adhered to the dental prosthetic 136, with adhesive 150.

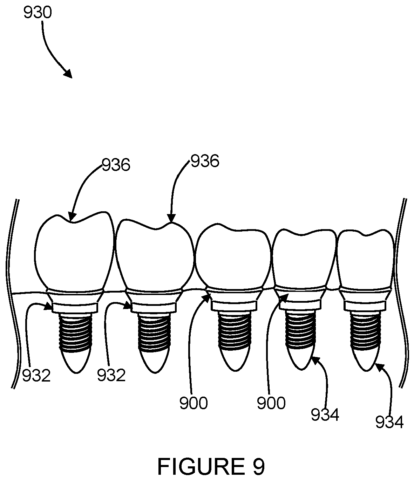

Figures 6 to 8 show a dental implant system 130 that replaces a single tooth. However, as shown in Figure 9, the adaptors described herein can also be used in a dental implant system 930 that replaces multiple teeth (e.g. a full arch replacement). In Figure 9, a section of a full arch replacement is shown. Such systems can include a plurality of dental implants 934 (only two of which are labelled), a plurality of abutments 932 (only two of which are labelled), a plurality of adaptors 900 (only two of which are labelled), and a plurality of dental prosthetics 936 (only two of which are labelled).

While the above description provides examples of one or more processes or apparatuses or compositions, it will be appreciated that other processes or apparatuses or compositions may be within the scope of the accompanying claims.

To the extent any amendments, characterizations, or other assertions previously made (in this or in any related patent applications or patents, including any parent, sibling, or child) with respect to any art, prior or otherwise, could be construed as a disclaimer of any subject matter supported by the present disclosure of this application, Applicant hereby rescinds and retracts such disclaimer. Applicant also respectfully submits that any prior art previously considered in any related patent applications or patents, including any parent, sibling, or child, may need to be re-visited.

## Claims

1. An adaptor for a dental implant abutment, comprising:
a body extending along a longitudinal axis between a proximal end and a distal end;
wherein the body has a longitudinally extending bore extending from the proximal end for sliding receipt of a post of a dental implant abutment;
wherein the body has a distal shaft for inserting into a dental prosthetic, and the distal shaft tapers in outer diameter going towards the distal end;
wherein the body has proximal flange for positioning between the dental prosthetic and the dental implant abutment, the proximal flange has a first ledge for abutting the dental implant abutment and a second ledge for abutting the dental prosthetic, and
the second ledge tapers in outer diameter going towards the distal end.

2. The adaptor of claim 1, wherein the distal shaft is frustoconical.

3. The adaptor of claim 1 or claim 2, wherein the proximal flange further comprises a third ledge between the first ledge and the second ledge for abutting gum tissue.

4. The adaptor of claim 3, wherein the third ledge tapers in outer diameter going from the second ledge towards the first ledge.

5. The adaptor of any one of claims 1 to 4, wherein
the distal shaft has an outer surface that is inclined at a first acute angle with respect to the longitudinal axis;
the second ledge is inclined at a second acute angle with respect to the longitudinal axis; and
the second acute angle is greater than the first acute angle.

6. The adaptor of claim 5, wherein
the proximal flange further comprises a third ledge between the first ledge and the second ledge for abutting gum tissue;
the third ledge is inclined at an obtuse angle with respect to the longitudinal axis.

7. The adaptor of any one of claims 1 to 6, wherein the first ledge is at a right angle with respect to the longitudinal axis.

8. The adaptor of any one of claims 1 to 7, wherein the body is fabricated from a polymer, a ceramic, and/or a metal.

9. A dental implant system comprising:
an abutment for securing between a dental implant and a dental prosthetic, the abutment having a first section for securing to the dental implant and a second section comprising a post; and
the adaptor of any one of clams 1 to 9 slidingly received on the post.

10. A method for installing a dental implant system, comprising:
a. securing a first section of an abutment to an implant;
b. sliding an adaptor onto a post of a second section of the abutment to position a proximal end of the adaptor towards the implant and a distal end of the adaptor away from the implant, and adhering the adaptor to the post;
c. inserting the distal end of the adaptor into a dental prosthetic to position a distal shaft of the adaptor within the dental prosthetic, wherein the distal shaft tapers in outer diameter going towards the distal end, and adhering the distal shaft to the dental prosthetic.

11. The method of claim 10, further comprising d. positioning a proximal flange of the adaptor between the dental prosthetic and the abutment.

12. The method of claim 10 or claim 11, wherein step b. comprises positioning a first ledge of the flange to abut the abutment.

13. The method of claim 12, wherein step d. further comprises positioning a second ledge of the flange to abut the dental prosthetic, wherein the second ledge tapers in outer diameter going towards the distal end.

14. The method of claim 13, wherein step d. further comprises positing a third ledge of the flange to abut a patient's gum tissue, wherein the third ledge tapers in outer diameter going towards the proximal end.
